# EUROPEAN PATENT SPECIFICATION

(11) **EP 2 727 743 B1**
(45) Date of publication and mention of the grant of the patent: **08.03.2017**
(21) Application number: 12804431.0
(22) Date of filing: 15.05.2012
(51) Int. Cl.: B60C 5/14, B60C 13/00, B29D 30/30, B60C 1/00, B29D 30/06

(54) **PNEUMATIC TIRE**
LUFTREIFEN
PNEUMATIQUE

(30) Priority: 29.06.2011 JP 2011143909
(43) Date of publication of application: 07.05.2014
(73) Proprietor: The Yokohama Rubber Co., Ltd., Minato-ku Tokyo 105-8685 (JP)
(72) Inventor: SETO,Hideki, Hiratsuka-shi Kanagawa 254-8601 (JP); ENDO,Toyoaki, Hiratsuka-shi Kanagawa 254-8601 (JP); HASHIMURA,Yoshiaki, Hiratsuka-shi Kanagawa 254-8601 (JP)
(74) Representative: Dilg, Haeusler, Schindelmann Patentanwaltsgesellschaft mbH
(86) International application number: PCT/JP2012/062422
(87) International publication number: WO 2013/001927

(56) References cited:
- EP-A1- 2 657 044
- JP-A- 4 355 121
- JP-A- 2001 294 024
- JP-A- 2004 322 782
- JP-A- 2008 012 945
- JP-A- 2008 126 437
- JP-A- 2009 241 855
- JP-A- 2009 248 965
- JP-A- 2011 057 184

## Description

The present invention relates to a pneumatic tire.

More specifically, the present invention relates to a pneumatic tire using a sheet made of a thermoplastic resin or a thermoplastic resin composition obtained by blending a thermoplastic resin with an elastomer, as an inner liner layer or a reinforcement sheet for reinforcing a certain part of the tire, the pneumatic tire being capable of preventing cracking or peeling of the reinforcement sheet or the inner liner layer around an end portion thereof in a tire circumferential direction from occurring after the pneumatic tire starts running, thereby being excellent in durability.

### Background Art

It has recently been proposed and studied to use a sheet-shaped material made of a thermoplastic resin or a thermoplastic resin composition obtained by blending a thermoplastic resin with an elastomer as an inner liner layer (air permeation preventive layer) or a reinforcement sheet for reinforcing a certain part of the pneumatic tire (see Patent Literature 1 and Patent Literature 2).

However, particularly when such a sheet is used in a part which will be repeatedly subjected to deformation, the sheet is sometimes peeled off around an end portion thereof after the tire starts running.

The peeling generally occurs in the following manner: cracking first occurs near an end portion of a sheet-shaped material made of a thermoplastic resin or a thermoplastic resin composition obtained by blending a thermoplastic resin with an elastomer, and the cracking further progresses as the tire is used, resulting in a phenomenon in which the sheet is peeled off a main rubber or a tie rubber.

Meanwhile, in view of streamlining the processes or the like, it has been studied to form a sheet-shaped material in a cylindrical shape at the raw material stage, and to incorporate such cylindrical sheet-shaped material with no splices into a tire for use. In the case of using a sheet formed into a cylindrical shape with no splice as a constituent member of a tire, there are no sheet end portions extending in a tire width direction. Accordingly, this approach has an advantageous effect to some extent in suppressing occurrence of cracking around end portions of the sheet in the tire width direction. However, some portions situated around end portions of the sheet extending in a circumferential direction, in general, shoulder portions and sidewall portions, are likely to be repeatedly subjected to a large deformation. In such portions, cracking of the sheet and peeling of the sheet off a main rubber or a tie rubber still occur around the end portions thereof extending in the circumferential direction in some cases.

### Citation List, Patent Literature

PTL 1: JP 2006-44487A
PTL 2: JP 2009-241855A

### Summary of Invention

### Technical Problem:

In view of the above-described circumstances, an object of the present invention is to provide a pneumatic tire using a sheet-shaped material made of a thermoplastic resin or a thermoplastic resin composition obtained by blending a thermoplastic resin with an elastomer as an inner liner layer (air permeation preventive layer) or a reinforcement sheet for reinforcing a certain part of the pneumatic tire, the pneumatic tire being capable of preventing cracking or peeling of the reinforcement sheet or the inner liner layer around an end portion thereof in a tire circumferential direction from occurring after the pneumatic tire starts running, thereby being excellent in durability.

### Solution to Problem:

The pneumatic tire of the present invention for achieving the above-described object has the following configuration (1):
(1) A pneumatic tire including a sheet made of a thermoplastic resin or a thermoplastic resin composition obtained by blending an elastomer in a thermoplastic resin, the sheet being disposed inside the tire or in a surface portion of the tire, characterized in that a sheet in which a sheet end portion thereof extending in a tire circumferential direction is subjected to a tip-sharpening process is used as the sheet made of a thermoplastic resin or a thermoplastic resin composition obtained by blending an elastomer in a thermoplastic resin.

Further, the pneumatic tire of the present invention preferably has any of the following configurations (2) to (7):
(2) The pneumatic tire described in (1), characterized in that the tip-sharpening process such that a thickness T (µm) satisfies a relation of 0.1t≤T≤0.8t at a position shifted inward by a length of (t×1/3) from a tip of the sheet made of the thermoplastic resin or thermoplastic resin composition obtained by blending the elastomer in the thermoplastic resin, wherein
   t represents a tire-circumferential-direction average thickness (µm) of a tip-sharpening unprocessed part of the sheet made of the thermoplastic resin or thermoplastic resin composition obtained by blending the elastomer in the thermoplastic resin, and
   T represents the thickness (µm) of the sheet 2 at the position shifted inward by the length of (t×1/3) from the tip of the sheet made of the thermoplastic resin or thermoplastic resin composition obtained by blending the elastomer in the thermoplastic resin.
(3) The pneumatic tire described in (1) or (2), characterized in that the part subjected to the tip-sharpening process extends to a position shifted inward by a length L, the length L being expressed by L=(1.0 to 20)xt (µm).
(4) The pneumatic tire described in any one of (1) to (3), characterized in that the part subjected to the tip-sharpening process extends to a position shifted inward by a length L from the tip, the length L being expressed by L=(1.0 to 2.5)xt (µm).
(5) The pneumatic tire described in any one of (1) to (4), characterized in that
   the sheet is a reinforcement sheet, and
   the reinforcement sheet made of the thermoplastic resin or thermoplastic resin composition obtained by blending the elastomer in the thermoplastic resin is disposed within a region starting at a position shifted by 50 mm toward a center from an end portion of a belt, and terminating at a position of an upper end a bead core.
(6) The pneumatic tire described in any one of (1) to (4), characterized in that the sheet is disposed as an inner liner layer.
(7) The pneumatic tire described in any one of (1) to (6), characterized in that the sheet has a thickness of 0.03 to 0.3 mm.

### Advantageous Effects of Invention:

The invention according to claim 1 provides a pneumatic tire using a sheet-shaped material made of a thermoplastic resin or a thermoplastic resin composition obtained by blending a thermoplastic resin with an elastomer as an inner liner layer (air permeation preventive layer) or a reinforcement sheet for reinforcing a certain part of the pneumatic tire, the pneumatic tire being capable of favorably suppressing occurrence of cracking or peeling of the reinforcement sheet or the inner liner layer around an end portion of the reinforcement sheet or the inner liner layer in the tire circumferential direction after the pneumatic tire starts running, thereby being excellent in durability.

In particular, the pneumatic tire of the present invention according to any one of claims 2 to 7 has the above-described effect of the present invention according to claim 1 and also is capable of obtaining the expected effect more securely to a large extent.

### Brief Description of Drawings

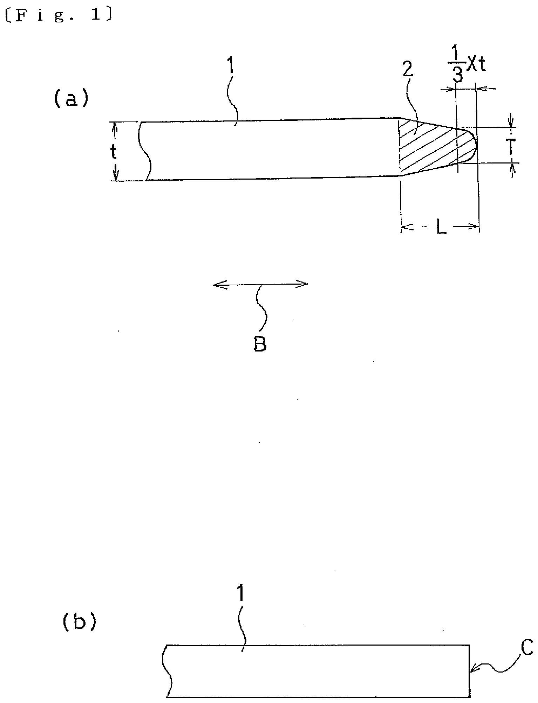

[Fig. 1] Fig. 1 is a cross-sectional view of a sheet end portion of a sheet-shaped material used in the present invention, the cross-sectional view being taken in a tire width direction and showing as a model a tip-sharpening processed portion of the sheet-shaped material, the sheet-shaped material being made of a thermoplastic resin or a thermoplastic resin composition obtained by blending a thermoplastic resin with an elastomer in which the sheet end portion extending in the tire circumferential direction is subjected to a tip-sharpening process.

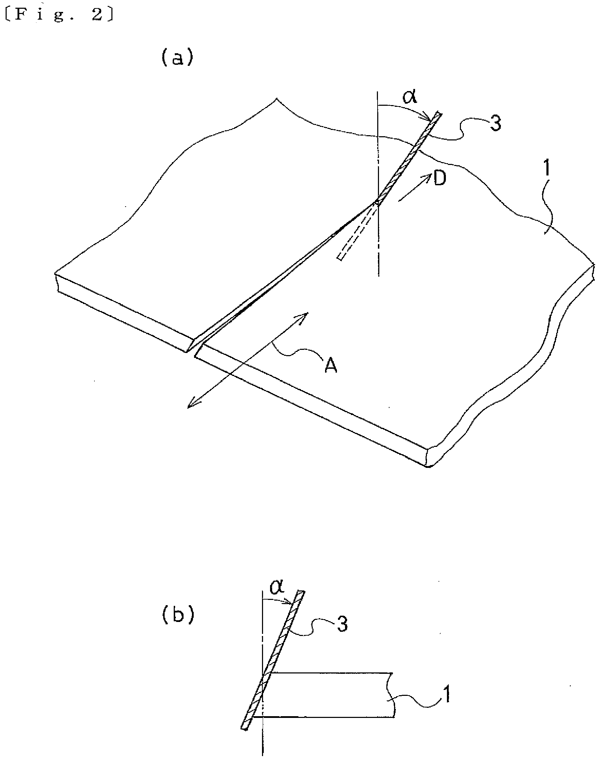

[Fig. 2] Part (a) of Fig. 2 is a model diagram showing one example of a cutting method that enables a sheet made of a thermoplastic resin or a thermoplastic resin composition obtained by blending a thermoplastic resin with an elastomer to be obtained with the tip of the sheet in the width direction being subjected to a sharpening process when cutting the sheet with a desired length and shape, and Part (b) of Fig. 2 shows, as a model, a relation between a heat cutter and a form of a tip portion of the sheet of the thermoplastic resin or the thermoplastic resin composition obtained by the cutting method.

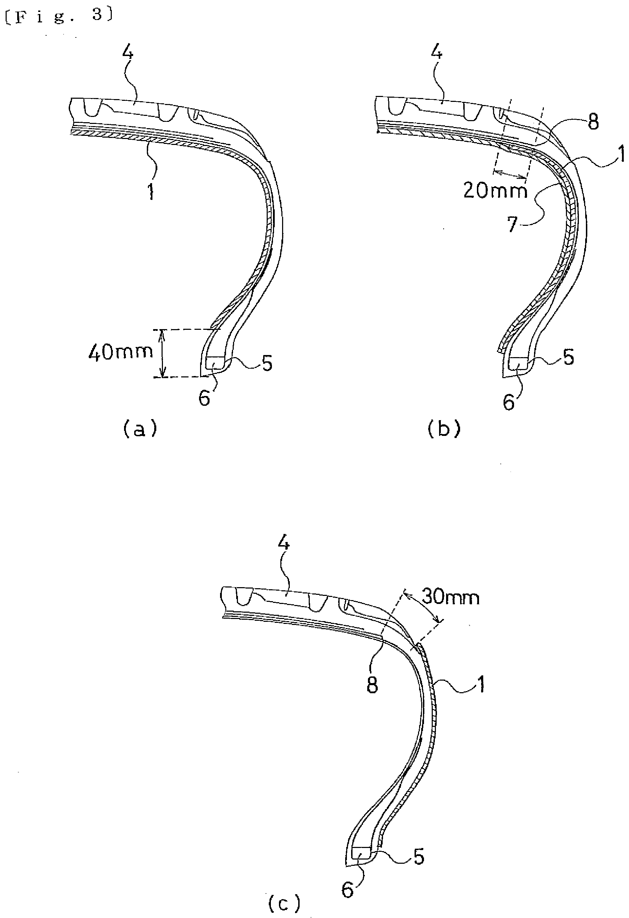

[Fig. 3] Parts (a), (b), and (c) all are cross-sectional views taken in a tire meridian direction, showing, as models, favorable disposing positions when the sheet-shaped material made of a thermoplastic resin or a thermoplastic resin composition obtained by blending a thermoplastic resin with an elastomer is disposed inside the tire or in a surface portion of the tire in the present invention.

### Description of Embodiments

Hereinafter, a pneumatic tire of the present invention will be described further in detail.

The pneumatic tire of the present invention is a pneumatic tire including a sheet made of a thermoplastic resin or a thermoplastic resin composition obtained by blending an elastomer in a thermoplastic resin, the sheet being disposed inside the tire or in a surface portion of the tire, characterized in that a sheet in which a sheet end portion thereof extending in a tire circumferential direction is subjected to a tip-sharpening process is used as the sheet made of a thermoplastic resin or a thermoplastic resin composition obtained by blending an elastomer in a thermoplastic resin.

In the present invention, the above-described sheet made of a thermoplastic resin or a thermoplastic resin composition obtained by blending an elastomer in a thermoplastic resin refers to a sheet to be used as a member constituting an inner liner layer (air permeation preventive layer) or a reinforcement sheet for reinforcing a certain part of the pneumatic tire.

It is possible to make the pneumatic tire excellent in durability by using the sheet made of a thermoplastic resin or a thermoplastic resin composition obtained by blending an elastomer in a thermoplastic resin in which the sheet end portion thereof extending in the tire circumferential direction is subjected to the tip-sharpening process as described above, as a member constituting the reinforcement sheet or the inner liner layer. Specifically, even when the sheet is repeatedly subjected to a large deformation after the tire starts running, occurrence of the above-described cracking and peeling of the sheet in the sheet end portion extending in the tire circumferential direction is suppressed. Accordingly, the pneumatic tire is capable of exhibiting the expected effect obtained by disposing the sheet for a long period of time. It is considered that the cracking and peeling can be prevented from occurring because the subjecting of the tip of the sheet to the sharpening process effectively allows stress to be distributed and relaxed even when a large deformation is repeatedly applied to the sheet.

In the present invention, regarding the sheet of a thermoplastic resin or a thermoplastic resin composition obtained by blending an elastomer in a thermoplastic resin (hereinbelow, sometimes referred to simply as a "sheet"), the tip of the sheet end portion thereof extending in the tire circumferential direction being "subjected to the tip-sharpening process means that the sheet has a tip-sharpening processed part 2, which has been subjected to the sharpening process and is gradually thinner toward the tip as shown as a model in Part (a) of Fig. 1. This accordingly refers to a configuration that the sheet end portion in the tire circumferential direction has been subjected to a physical or chemical process, or both of these processes, or a combination of these processes and a thermal process, or any other similar processes so as to have such a cross-sectional shape.

Meanwhile, if the sheet is simply cut at ordinary temperature by using a normal cutting tool, the cross sectional surface of the sheet is shaped to have a cut end face C perpendicular to the sheet as viewed in a cut cross-sectional view taken in a width direction of the sheet as in Part (b) of Fig. 1.

In obtaining the sheet 1 according to the present invention, the tip-sharpening process on the end portion of the sheet 1 in the tire circumferential direction may be performed on the sheet only, or may be performed on a laminate obtained by stacking a tie rubber and the like on the sheet when the sheet is to be used together with such tie rubber and the like stacked thereon in a tire.

The "shape being subjected to the sharpening process and gradually thinner toward the tip" may be a shape in which the sheet is "rounded" on and around the tip. Even a shape with such roundness also significantly exhibits the effect in preventing the above-described cracking or peeling from occurring.

The form in which the tip of the end portion of the sheet in the circumferential direction has been subjected to the tip-sharpening process is such that the sharpened form is substantially maintained before and after the curing of the tire, and its effect in preventing the above-described cracking or peeling off a main rubber or a tie rubber from occurring is effectively exhibited after the tire including the sheet starts to be used.

As described above, the tip-sharpening process on the tip of the sheet exhibits its effect even with the provision of only roundness. However, to stably achieve a particularly high effect, the tip-sharpening process is preferably performed such that a thickness T (µm) satisfies a relation of 0.1t≤T≤0.8t at a position shifted inward by a length of (t×1/3) from the tip of the sheet made of a thermoplastic resin or a thermoplastic resin composition obtained by blending an elastomer in a thermoplastic resin. Part (a) of Fig. 1 shows this relation and specifies a relation regarding the level of the thickness at the position shifted inward by (t/3) from the tip. A more preferable relation is 0.2t≤T≤0.6t. Here, t represents a tire-circumferential-direction average thickness (µm) of a tip-sharpening unprocessed part of the sheet made of a thermoplastic resin or a thermoplastic resin composition obtained by blending an elastomer in a thermoplastic resin while T represents a thickness (µm) of the sheet at the position shifted inward by the length of (t×1/3) from the tip of the sheet made of a thermoplastic resin or a thermoplastic resin composition obtained by blending an elastomer in a thermoplastic resin.

In addition, a length L of the part subjected to the tip-sharpening process (indicated by "2" in Part (a) of Fig. 1) is preferably (1.0 to 20)xt (µm), in other words, the tip-sharpening processed portion preferably extends to a position shifted inward by the length L. The length L is more preferably (1.0 to 10)xt (µm), and is further more preferably (1.0 to 2.5)xt (µm).

The shape of the part subjected to the tip-sharpening process is desirably smoothly tapered in the cross-sectional shape as shown in Part (a) of Fig. 1. However, since the effect can be exhibited with a non-smoothly-tapered shape, the shape may be a an asymmetrically tapered shape, a shape sharpened in a tapered manner and curved in one direction (for example, toward the main rubber or the tie rubber layer), a somewhat uneven shape, a rounded shape as described above, or may be any other similar shape.

In the present invention, the tip-sharpening process on the tip of the end portion extending in the circumferential direction of the sheet may be performed in the following, or similar, method. One method involves pulling out a sheet from a wound roll by a predetermined length, and thermally cutting the sheet with tension applied thereto with a heat cutter such as an electrically-heated wire applied to the sheet. Another method involves first cutting a sheet by using a normal cutting tool, and then performing chemical dissolution processing using an alkali, an acid, or the like, or physical processing such as various kinds of grinding using a grinder, a file, or the like on the cut end face of the cut sheet in a direction that is brought into conformity to the tire circumferential direction. Among these, the thermal cutting of the sheet using a heat cutter having an obtuse cutting edge (dull cutting performance) with tension applied to the sheet, or any similar method, is preferable from the viewpoint of easiness in control, equipment, and costs.

Note that in the case of thermal cutting method, particularly if the sheet is made of a thermoplastic resin composition obtained by blending an elastomer in a thermoplastic resin, the thermoplastic resin receives heat and is caused to flow in the surface of the tip part subjected to the tip-sharpening process during the cutting. Accordingly, there occurs a phenomenon in which the sheet is obtained while the elastomer present in the surface near the cut end is covered with a film of the thermoplastic resin. The sheet thus obtained has cure adhesion stronger than the case where cure adhesion is made with the elastomer exposed. For this reason as well, this is more effective in preventing the above-described cracking and peeling from occurring. In general, if an elastomer exists, exposed on the cut face of the sheet, the elastomer inhibits the cure adhesion to lower the strength of the cure adhesion between the sheet of a thermoplastic resin composition and the main rubber or tie rubber. For this reason, it is preferable to sharpen the tip of the sheet in such a manner as to avoid exposure of the elastomer as much as possible. From this viewpoint, the above-described thermal cutting method is preferable. When the thermal cutting method is employed, the thermal cutting is conducted preferably under conditions that sufficiently allow the thermoplastic resin, which is melted to flow by heat of the thermal cutting, to cover the entire elastomer present on the cut face. Specifically, the thermal cutting is conducted preferably at a cutting temperature within the range of (the melting point of the thermoplastic resin + 30°C) to (the melting point of the thermoplastic resin + 180°C). If the cutting temperature is lower than this range, it is difficult to cause the thermoplastic resin to flow, making it difficult to sufficiently cover the elastomer. On the other hand, if the cutting temperature is higher than this range, the thermoplastic resin composition is degraded sometimes, and this is thus not preferable.

The thermal cutting is preferably conducted by using a heat cutter or by using a laser beam. It is important to apply heat as well as tension for the thermal cutting. Further, the cutting may be conducted with a heat cutter while applying a pressure. Alternatively, an ultrasonic cutter or a high-frequency cutter may be similarly used.

In addition, when the tip-sharpening process is performed by cutting the sheet without utilizing heat, and then appropriately applying hot air, a heating plate, or a heating roller to the cut end portion after the cutting, the effect of the "phenomenon in which the sheet is obtained while the elastomer present in the surface near the cut end is covered with a film of the thermoplastic resin" can be obtained simultaneously along with the process.

Part (a) of Fig. 2 is a model diagram showing one example of the cutting method that enables the sheet 1 made of a thermoplastic resin or a thermoplastic resin composition to be obtained with the tip thereof being subjected to the sharpening process when cutting the sheet 1 made of a thermoplastic resin or a thermoplastic resin composition with desired length and shape. Specifically, Part (a) of Fig. 2 shows an example of thermal melt cutting in which a heat cutter 3 is inclined at an inclination angle α in a direction that is brought into conformity to the tire width direction of the sheet 1, and is moved in a moving direction (direction indicated by the arrow D) of the heat cutter 3, which coincides with a direction that is brought into conformity to the tire circumferential direction of the sheet (indicated by the arrow A). Part (b) of Fig. 2 shows, as a model, a relation between the heat cutter 3 and the form of the tip portion of the sheet 1 of the thermoplastic resin or thermoplastic resin composition obtained by the cutting method shown in Part (a), in which the tip of the sheet is sharpened at the cut end portion. The inclination angle α is preferably within the range of 30 to 60°.

In the present invention, when the above-described sheet is used as a reinforcement sheet for reinforcing a certain part of a pneumatic tire, it is effective to use the sheet at a part where a large deformation is repeatedly applied during running. It is generally preferable to dispose the sheet such that at least part or all of the sheet is located within a region starting at a position shifted by 50 mm toward the center (tire equator) from an end portion of a belt having the maximum belt width, extending toward a bead, and terminating at a position of an upper end of a bead core. In particular, portions where the reinforcement sheet is preferably disposed are portions called a tire shoulder portion and a sidewall portion. Accordingly, it is effective to reinforce the side to shoulder portion toward the center (tire equator) from the position of the upper end of the bead core which is relatively secured and can be said not to receive a large deformation. When used as the reinforcement layer, the sheet may be disposed inside the tire or may be used in the surface portion (both outer surface and cavity-side surface) of the tire.

On the other hand, when used as an inner liner layer (air permeation preventive layer), the above-described sheet may be disposed at a position where a normal inner liner layer is disposed. In this case, the above-described sheet may be used as a reinforcement layer for the inner liner layer.

Parts (a) to (c) of Fig. 3 show examples of how the sheet is used in various manners. Part (a) of Fig. 3 shows an example where the above-described sheet 1 is disposed on an inner surface of the tire, and specifically where the above-described sheet 1 is disposed at least within a region starting at a position shifted by approximately 40 mm toward the outer periphery of the tire from the tip of one bead toe in particular, extending across the tire equator, and terminating at a position shifted by approximately 40 mm toward the outer periphery of the tire from the tip of the opposite bead toe. Reference numerals 5 and 6 denote a bead portion and a bead core.

Part (b) of Fig. 3 shows an example where the above-described sheet 1 is disposed inside the tire, and specifically where the above-described sheet 1 is disposed, on an inner liner 7 on the outer periphery side of the tire, at least within a region starting at a position shifted by 20 mm toward the center from an end of a belt 8 having the maximum width, extending across the shoulder portion and the sidewall portion, and terminating at the upper end of a bead core 6. In this case, the inner liner 7 may be formed of a sheet made of butyl rubber or a thermoplastic resin or a thermoplastic resin composition obtained by blending an elastomer in a thermoplastic resin as described in the present invention.

Part (c) of Fig. 3 shows an example where the above-described sheet 1 is disposed on the outer surface of the tire, and specifically where the above-described sheet 1 is disposed at least within a region starting at a position shifted by 30 mm toward the bead from the end of the belt 8 having the maximum width, extending across the shoulder portion and the sidewall portion, and terminating at the upper end of the bead core 6.

In the present invention, the thickness of the sheet is preferably 0.03 to 0.3 mm. Particularly when the sheet is used as a reinforcement sheet, the thickness is preferably 0.1 to 0.3 mm. When the sheet is used as a sheet constituting an inner liner layer, the thickness is preferably 0.03 to 0.15 mm.

Example of the thermoplastic resin preferably usable in the present invention include: polyamide-based resins [for example, nylon 6 (N6), nylon 66 (N66), nylon 46 (N46), nylon 11 (N11), nylon 12 (N12), nylon 610 (N610), nylon 612 (N612), nylon 6/66 copolymers (N6/66), nylon 6/66/610 copolymers (N6/66/610), nylon MXD6 (MXD6), nylon 6T, nylon 9T, nylon 6/6T copolymers, nylon 66/PP copolymers, and nylon 66/PPS copolymers] and their N-alkoxyalkylates, for example, methoxymethylated nylon 6, methoxymethylated nylon 6/610 copolymers, and methoxymethylated nylon 612; polyester-based resins [for example, aromatic polyesters such as polybutylene terephthalate (PBT), polyethylene terephthalate (PET), polyethylene isophthalate (PEI), PET/PEI copolymers, polyarylate (PAR), polybutylene naphthalate (PBN), liquid crystal polyester, and polyoxyalkylene diimide diacid/polybutylene terephthalate copolymers]; polynitrile-based resins [for example, polyacrylonitrile (PAN), polymethacrylonitrile, acrylonitrile/styrene copolymers (AS), (meth)acrylonitrile/styrene copolymers, and (meth)acrylonitrile/styrene/butadiene copolymers]; polymethacrylate-based resins [for example, polymethyl methacrylate (PMMA) and polyethylmethacrylate]; polyvinyl-based resins [for example, vinyl acetate, polyvinyl alcohol (PVA), vinyl alcohol/ethylene copolymers (EVOH), polyvinylidene chloride (PDVC), polyvinyl chloride (PVC), vinyl chloride/vinylidene chloride copolymers, vinylidene chloride/methyl acrylate copolymers, and vinylidene chloride/acrylonitrile copolymers (ETFE)]; cellulose-based resins [for example, cellulose acetate and cellulose acetate butyrate]; fluororesins [for example, polyvinylidene fluoride (PVDF), polyvinyl fluoride (PVF), polychlorofluoroethylene (PCTFE), and tetrafluoroethylene/ethylene copolymers]; imide-based resins [for example, aromatic polyimide (PI)]; and the like.

Moreover, examples of the thermoplastic resin and the elastomer preferably usable in the present invention for constituting the thermoplastic resin composition are as follows. As the thermoplastic resin, the above-described examples can be used. Examples of the elastomer preferably usable in the present invention include: diene rubbers and their hydrogenated products [for example, natural rubbers (NR), isoprene rubber (IR), epoxidized natural rubbers, styrene-butadiene rubber (SBR), butadiene rubbers (BR, high-cis BR, and low-cis BR), nitrile rubber (NBR), hydrogenated NBR, and hydrogenated SBR]; olefin-based rubbers [for example, ethylene propylene rubbers (EPDM and EPM), maleic acid-modified ethylene propylene rubber (M-EPM), butyl rubber (IIR), copolymers of isobutylene and aromatic vinyl or diene monomer, acrylic rubber (ACM), and ionomers]; halogen-containing rubbers [for example, Br-IIR, CI-IIR, brominated isobutylene-co-para-methylstyrene (BIMS), chloroprene rubber (CR), hydrin rubber (CHR), chlorosulfonated polyethylene rubber (CSM), chlorinated polyethylene rubber (CM), and maleic acid-modified chlorinated polyethylene rubber (M-CM)]; silicone rubbers [for example, methyl vinyl silicone rubber, dimethyl silicone rubber, and methylphenylvinyl silicone rubber]; sulfur-containing rubbers [for example, polysulfide rubber]; fluororubbers [for example, vinylidene fluoride-based rubbers, fluorine-containing vinyl ether-based rubbers, tetrafluoroethylene-propylene-based rubbers, fluorine-containing silicone-based rubbers, and fluorine-containing phosphazene-based rubbers]; thermoplastic elastomers [for example, styrene-based elastomers, olefin-based elastomers, ester-based elastomers, urethane-based elastomers, and polyamide-based elastomers]; and the like.

Moreover, if a specific one of the above-described thermoplastic resins and a specific one of the above-described elastomers to be blended in combination are incompatible with each other, an appropriate compatibilizer can be used as a third component to make them compatible with each other. Mixing such a compatibilizer in the blend decreases the interfacial tension between the thermoplastic resin and the elastomer. As a result, the particle size of the elastomer, which constitutes the dispersed phase, becomes finer, allowing the characteristics of these components to be exhibited more effectively. In general, such a compatibilizer may have a copolymer structure including both or either of the structures of the thermoplastic resin and the elastomer, or a copolymer structure including an epoxy group, a carbonyl group, a halogen group, an amino group, an oxazoline group, or a hydroxyl group that is capable of reacting with the thermoplastic resin or the elastomer. Such a compatibilizer may be selected depending on the types of the thermoplastic resin and the elastomer with which the compatibilizer is blended. Examples of the compatibilizer normally used include: styrene/ethylene-butylene block copolymers (SEBS) and their maleic acid-modified products; EPDM; EPM; EPDM/styrene or EPDM/acrylonitrile graft copolymers and their maleic acid-modified products; styrene/maleic acid copolymers; reactive phenoxine; and the like. The blending proportion of such a compatibilizer is not particularly limited but is preferably 0.5 to 10 parts by weight per 100 parts by weight of the polymer components (the total amount of the thermoplastic resin and the elastomer).

In the thermoplastic resin composition obtained by blending a specific thermoplastic resin and a specific elastomer, the composition ratio between the specific thermoplastic resin and the specific elastomer is not particularly limited and may be set as appropriate so that the thermoplastic resin composition can have a structure in which the elastomer is dispersed as a discontinuous phase in the matrix of the thermoplastic resin. A preferable range for this composition ratio is 90/10 to 30/70 in weight ratio.

In the present invention, another polymer such as a compatibilizer may be mixed in the thermoplastic resin or thermoplastic resin composition obtained by blending a thermoplastic resin with an elastomer, as long as the other polymer does not impair the characteristics needed for the reinforcement sheet or the inner liner. The purposes of mixing such another polymer are to improve the compatibility between the thermoplastic resin and the elastomer, to improve moldability of the materials, to improve heat resistance, to reduce costs, and so on. Examples of materials used for these purposes include polyethylene (PE), polypropylene (PP), polystyrene (PS), ABS, SBS, polycarbonate (PC), and the like. In addition, a filler (calcium carbonate, titanium oxide, alumina, or the like) generally blended in a polymer blend, a reinforcing agent such as carbon black and white carbon, a softener, a plasticizer, a processing aid, a pigment, a dye, an antioxidant, and the like may be blended optionally as long as the blended material does not impair the characteristics needed for the reinforcement sheet or the inner liner. The thermoplastic resin composition has a structure in which the elastomer is dispersed as a discontinuous phase in the matrix of the thermoplastic resin. With such a structure, the thermoplastic resin composition can provide sufficient flexibility to the reinforcement sheet or the inner liner together with sufficient rigidity resulting from the effect of the resin layer as a continuous phase, and also can achieve moldability at the same level as that for of thermoplastic resin during molding regardless of the amount of the elastomer.

The Young's modulus of each of the thermoplastic resin and the elastomer usable in the present invention is not particularly limited but is preferably set to 1 to 500 MPa, and more preferably to 50 to 500 MPa.

### EXAM PLES

Examples 1 to 3 and Comparative Examples 1 to 3
Hereinbelow, the pneumatic tire of the present invention will be described in detail with reference to Examples and others.

Tires of 215/70R15 98H were used as test tires. Two test tires were prepared for each of Examples and Comparative Examples. Each tire was mounted on a standard rim of 15x6.5JJ specified in JATMA and inflated to a tire internal pressure of 170 kPa.

After each pneumatic tire was run for a distance of 50,000 km with a load of 7.35 kN, it was checked whether or not cracking occurred in each test tire. Further, after the tire was run for more 50,000 km (run for 100,000 km in total), it was checked whether or not cracking occurred in each test tire.

The sheet of a thermoplastic resin composition used here was a cylindrical sheet material with no splice, which is made of a thermoplastic resin composition obtained by blending N6/66 as a thermoplastic resin and BIMS as an elastomer at a blending ratio of 50/50 as shown in Table 1, and which is formed into a cylindrical shape (with a diameter of 38 cm) with a sheet thickness of 150 µm (=0.15 mm).

The sheets of Examples 1 to 3 were each obtained by thermally cutting the end portions of the entire circumferential at both edges of the cylindrical sheet (prepared as a continuous length), which serve as end portions in the tire circumferential direction, at a temperature of 300°C, with an inclination angle α of 30°, and with a cutter speed of 5 cm/sec, in the manner shown in Fig. 2. In each of the sheets, the tip part at the end of the entire circumference was cut with a blade obliquely applied to the sheet while being melted to thus be subjected to the sharpening process. The state of the sheet subjected to the sharpening process was as follows: the thickness T (µm) of the sheet was 150 µm, and the thickness T was 35 µm at a position shifted inward by 50 µm, which is a value of (t×1/3), from the tip of the sheet. Moreover, the length L of the part subjected to the tip-sharpening process was 330 µm.

The sheets of Comparative Examples 1 to 3 were each obtained by only cutting the end portions of the entire circumference at both edges of the cylindrical sheet prepared as a continuous length with a blade (non-heated) applied to the sheet in a perpendicular direction. Accordingly, the sheets of Comparative Examples 1 to 3 were not subjected to the sharpening process.

Example 1 and Comparative Example 1 are used in the manner shown in Part (a) of Fig. 3. Example 2 and Comparative Example 2 are used in the manner shown in Part (b) of Fig. 3. Example 3 and Comparative Example 3 are used in the manner shown in Part (c) of Fig. 3.

Results of evaluation are shown in Table 2.

As understood from the results, the sheets of Examples 1 to 3 of the present invention were significantly excellent in durability as compared with those of Comparative Examples 1 to 3. It was confirmed that the pneumatic tires of Examples of the present invention were capable of particularly exhibiting the expected effect obtained by disposing the sheet for a long period of time.

**[Table 1]**

| | | Parts by Weight |
|---|---|---|
| BIMS^{a)} | "Exxpro 3035" manufactured by Exxon Mobil Chemical | 100 |
| Zinc Oxide | "Zinc Oxide No. 3" manufactured by Seido Chemical Indusutry Co.,Ltd | 0.5 |
| Stearic Acid | Industial Stearic Acid | 0.2 |
| Zinc Stearate | "Zinc Stearate" manufactured by NOF corporation | 1 |
| N6/66 | "UBE Ubenylon5033B" manufactured by Ube Industiries, Ltd | 100 |
| Modified EEA^{b)} | "HPR-AR201" manufactured by Du Pont-Mitsui Polychemicals Co.,Ltd | 10 |

| | | |
|---|---|---|
| Notes: a) Brominated isobutylene-p-methylstyrene copolymer b) Maleic anhydride modified ethylene-ethyl acrylate copolymer[0053] | | |

**[Table 2]**

| | Comp. Example 1 | Example 1 | Comp. Example 2 | Example 2 | Comp. Example 3 | Example 3 |
|---|---|---|---|---|---|---|
| After run for 50,000 km | Cracking Occurred | No Cracking Occurred | Cracking Occurred | No Cracking Occurred | Cracking Occurred | No Cracking Occurred |
| After run for 100,000 km | - | No Cracking Occurred | - | Minute Cracking Occurred | - | Minute Cracking Occurred |

### Reference Signs List

- 1:: sheet of thermoplastic resin or thermoplastic resin composition obtained by blending thermoplastic resin with elastomer
- 2:: part subjected to tip-sharpening process
- 3:: heat cutter
- 4:: tread portion
- 5:: bead portion
- 6:: bead core
- 7:: inner liner layer
- A:: tire circumferential direction
- B:: tire width direction
- L:: length of part subjected to tip-sharpening process
- T:: thickness (µm) of sheet made of a thermoplastic resin or a thermoplastic resin composition obtained by blending an elastomer in a thermoplastic resin, at a position shifted inward by a length of (t×1/3) from tip of sheet
- t:: tire-circumferential-direction average thickness (µm) of tip-sharpening unprocessed part of sheet made of a thermoplastic resin or a thermoplastic resin composition obtained by blending an elastomer in a thermoplastic resin

## Claims

1. A pneumatic tire comprising a sheet (1) made of a thermoplastic resin or a thermoplastic resin composition obtained by blending an elastomer in a thermoplastic resin, the sheet (1) being disposed inside the tire or in a surface portion of the tire, wherein
a sheet (1) in which a sheet end portion (2) thereof extending in a tire circumferential direction is subjected to a tip-sharpening process is used as the sheet (1).

2. The pneumatic tire according to claim 1, **characterized by** the tip-sharpening process being such that a thickness T (µm) satisfies a relation of 0.1t≤T≤0.8t at a position shifted inward by a length of (t×1/3) from a tip (2) of the sheet (1), wherein
t represents a tire-circumferential-direction average thickness (µm) of a tip-sharpening unprocessed part of the sheet (1), and
T represents the thickness (µm) of the sheet (1) at the position shifted inward by the length of (t×1/3) from the tip of the sheet.

3. The pneumatic tire according to claim 1 or 2, **characterized in that** the part (2) subjected to the tip-sharpening process extends to a position shifted inward by a length L, the length L being expressed by L=(1.0 to 20)xt (µm).

4. The pneumatic tire according to any one of claim 1 to 3, **characterized in that** the part (2) subjected to the tip-sharpening process extends to a position shifted inward by a length L from the tip (2), the length L being expressed by L=(1.0 to 2.5)xt (µm).

5. The pneumatic tire according to any one of claims 1 to 4, **characterized in that** the sheet (1) is a reinforcement sheet, and
the reinforcement sheet made of the thermoplastic resin or thermoplastic resin composition obtained by blending the elastomer in the thermoplastic resin is disposed within a region starting at a position shifted by 50 mm toward a center from an end portion of a belt (8), and terminating at a position of an upper end of a bead core.

6. The pneumatic tire according to any one of claims 1 to 4, **characterized in that** the sheet (1) is disposed as an inner liner layer (7).

7. The pneumatic tire according to any one of claims 1 to 6, **characterized in that** the sheet (1) has a thickness of 0.03 to 0.3 mm.

## Patentansprüche

1. Luftreifen, umfassend eine Lage (1), die aus einem thermoplastischen Harz oder einer thermoplastischen Harzzusammensetzung hergestellt ist, die durch Mischen eines Elastomers in einem thermoplastischen Harz erhalten wird, wobei die Lage (1) im Inneren des Reifens oder in einem Oberflächenabschnitt des Reifens angeordnet ist, wobei eine Lage (1), in der ein Lagenendabschnitt (2) davon, der sich in einer Reifenumfangsrichtung erstreckt, einem Spitzenschärfungsprozess unterzogen wird, als die Lage (1) verwendet wird.

2. Luftreifen nach Anspruch 1, **dadurch gekennzeichnet, dass** der Spitzenschärfungsprozess
derart ist, dass eine Dicke T (µm) ein Verhältnis von 0,1 t≤T≤0,8 t an einer Position erfüllt, die nach innen um eine Länge von (tx 1/3) von einer Spitze (2) der Lage (1) verschoben ist, wobei
t für eine durchschnittliche Dicke (µm) in der Reifenumfangsrichtung eines unverarbeiteten Spitzenschärfungsteils der Lage (1) steht, und
T für die Dicke (µm) der Lage (1) an der Position steht, die nach innen um die Länge von (tx 1/3) von der Spitze der Lage verschoben ist.

3. Luftreifen nach Anspruch 1 oder 2, **dadurch gekennzeichnet, dass** sich der Teil (2), der dem Spitzenschärfungsprozess unterzogen wird, an eine Position erstreckt, die nach innen um eine Länge L verschoben ist, wobei die Länge L durch L=(1,0 bis 20)x t (µm) ausgedrückt ist.

4. Luftreifen nach einem der Ansprüche 1 bis 3, **dadurch gekennzeichnet, dass** sich der Teil (2), der dem Spitzenschärfungsprozess unterzogen wird, an eine Position erstreckt, die nach innen um eine Länge L von der Spitze (2) verschoben ist, wobei die Länge L durch L=(1,0 bis 2,5)x t (µm) ausgedrückt ist.

5. Luftreifen nach einem der Ansprüche 1 bis 4, **dadurch gekennzeichnet, dass**
die Lage (1) eine Verstärkungslage ist, und
die Verstärkungslage, die aus dem thermoplastischen Harz oder der thermoplastischen Harzzusammensetzung hergestellt ist, die durch Mischen des Elastomers in dem thermoplastischen Harz erhalten wird, in einem Bereich angeordnet ist, der an einer Position beginnt, die um 50 mm zu einem Zentrum von einem Endabschnitt eines Gürtels (8) verschoben ist, und an einer Position eines oberen Endes eines Wulstkerns endet.

6. Luftreifen nach einem der Ansprüche 1 bis 4, **dadurch gekennzeichnet, dass** die Lage (1) als eine Innenseelenschicht (7) angeordnet ist.

7. Luftreifen nach einem der Ansprüche 1 bis 6, **dadurch gekennzeichnet, dass** die Lage (1) eine Dicke von 0,03 bis 0,3 mm aufweist.

## Revendications

1. Pneumatique comprenant une feuille (1) constituée d'une résine thermoplastique ou d'une composition de résine thermoplastique obtenue par mélange d'un élastomère dans une résine thermoplastique, la feuille (1) étant disposée à l'intérieur du pneumatique ou dans une partie de surface du pneumatique, où
une feuille (1) dans laquelle une partie d'extrémité de feuille (2) de celle-ci s'étendant dans la direction circonférentielle du pneumatique est soumise à un procédé d'affinement d'extrémité est utilisée en tant que feuille (1).

2. Pneumatique selon la revendication 1, **caractérisé en ce que** le procédé d'affinement d'extrémité est
tel qu'une épaisseur T (µm) satisfait à une relation 0,1t ≤ T ≤ 0,8t au niveau d'une position décalée vers l'intérieur d'une longueur correspondant à (t × 1/3) à partir d'une extrémité (2) de la feuille (1), où
t représente une épaisseur moyenne (µm) dans la direction circonférentielle du pneumatique d'une partie non traitée par affinement d'extrémité de la feuille (1), et
T représente l'épaisseur (µm) de la feuille (1) au niveau de la position décalée vers l'intérieur de la longueur (t × 1/3) à partir de l'extrémité de la feuille.

3. Pneumatique selon la revendication 1 ou 2, **caractérisé en ce que** la partie (2) soumise au procédé d'affinement d'extrémité s'étend jusqu'à une position décalée vers l'intérieur d'une longueur L, la longueur L étant exprimée en tant que L = (1,0 à 20) × t (µm).

4. Pneumatique selon l'une quelconque des revendications 1 à 3, **caractérisé en ce que** la partie (2) soumise au procédé d'affinement d'extrémité s'étend jusqu'à une position décalée vers l'intérieur d'une longueur L à partir de l'extrémité (2), la longueur L étant exprimée par L = (1,0 à 2,5) × t (µm).

5. Pneumatique selon l'une quelconque des revendications 1 à 4, **caractérisé en ce que**
la feuille (1) est une feuille de renfort, et
la feuille de renfort constituée de la résine thermoplastique ou de la composition de résine thermoplastique obtenue par mélange de l'élastomère dans la résine thermoplastique est disposée à l'intérieur d'une région commençant au niveau d'une position décalée de 50 mm en direction d'un centre depuis une partie d'extrémité d'une nappe (8), et se terminant au niveau d'une position d'une extrémité supérieure d'une tringle.

6. Pneumatique selon l'une quelconque des revendications 1 à 4, **caractérisé en ce que** la feuille (1) est disposée en tant que couche de revêtement intérieure (7).

7. Pneumatique selon l'une quelconque des revendications 1 à 6, **caractérisé en ce que** la feuille (1) a une épaisseur de 0,03 à 0,3 mm.
